(19) Europäisches Patentamt
European Patent Office
Office européen des brevets

(11) **EP 2 176 623 B1**

(12) **FASCICULE DE BREVET EUROPEEN**

(45) Date de publication et mention
de la délivrance du brevet:
**26.10.2011  Bulletin 2011/43**

(21) Numéro de dépôt: **08775099.8**

(22) Date de dépôt: **15.07.2008**

(51) Int Cl.:
*G01C 23/00* (2006.01)   *G01P 13/00* (2006.01)

(86) Numéro de dépôt international:
**PCT/EP2008/059240**

(87) Numéro de publication internationale:
**WO 2009/010510 (22.01.2009 Gazette 2009/04)**

(54) **INSTRUMENT DE SECOURS POUR AERONEF**

BACKUP-INSTRUMENT FÜR FLUGZEUGE

BACKUP INSTRUMENT FOR AIRCRAFT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **17.07.2007  FR 0705156**

(43) Date de publication de la demande:
**21.04.2010  Bulletin 2010/16**

(73) Titulaire: **THALES**
**92200 Neuilly-sur-Seine (FR)**

(72) Inventeurs:
• **COLLOT, Lionel**
**F-41100 Vendome (FR)**
• **LEBLOND, Henri**
**F-78000 Versailles (FR)**
• **PAPINEAU, Jérôme**
**F-41290 La Chapelle Encherie (FR)**

(74) Mandataire: **Collet, Alain**
**Marks & Clerk France**
**Conseils en Propriété Industrielle**
**Immeuble " Visium "**
**22, avenue Aristide Briand**
**94117 Arcueil Cedex (FR)**

(56) Documents cités:
FR-A- 2 784 457   US-A- 3 948 096
US-A- 4 247 843   US-A- 4 598 292

**Description**

L'invention concerne un instrument de secours pour le pilotage d'aéronefs. De nombreux avions, notamment militaires, disposent d'un système de visualisation dit tête haute présentant au pilote de nombreuses informations issues des systèmes primaires de l'aéronef. Ces informations sont présentées sous forme de symboles affichés en surimpression du paysage visible au travers de parois vitrées du cockpit de l'aéronef.

En cas de panne de ce système de visualisation, le pilote doit utiliser une instrumentation de secours pour terminer sa mission ou rentrer à sa base. Le pilote utilise alors soit l'instrumentation électromécanique, traditionnellement présente sur la planche de bord de l'aéronef et comprenant un altimètre, un anémomètre ainsi qu'un horizon artificiel gyroscopique, soit un instrument combiné de secours regroupant les instruments électromécaniques présentés ci-dessus.

Dans les deux cas, l'instrumentation de secours affiche les informations disponibles de façon différentes de celles affichées avec un système tête haute. Le pilote perd la notion de repère dans lequel il évoluait. De plus, certaines informations, comme la représentation du vecteur vitesse de l'aéronef, n'existent plus ce qui impose au pilote de modifier sa façon d'intégrer les paramètres disponibles pour assurer un pilotage correct de son aéronef. Ceci peut être d'autant plus délicat que, dans une phase de vol devenue critique, la perte du système de visualisation principal est très souvent associée à une panne majeure de l'aéronef et donc à un stress supplémentaire du pilote.

Dans un système de visualisation tête haute, la représentation du vecteur vitesse est déterminée à partir d'informations provenant de sondes d'incidence et de dérapage. Le vecteur vitesse est notamment défini par sa direction suivant trois axes, un axe vertical et deux axes horizontaux. Ces sondes ne sont généralement pas reliées à l'instrument de secours ce qui empêche la détermination du vecteur vitesse par l'instrument de secours.

L'invention vise à pallier tout ou partie des problèmes cités plus haut en proposant un instrument de secours permettant au pilote de conserver un affichage semblable à un affichage tête haute.

A cet effet, l'invention a pour objet un instrument de secours pour aéronef comportant des moyens de mesure de la pression statique, de la pression totale d'un flux d'air entourant l'aéronef, des moyens de mesure inertielle, des moyens de calcul et d'affichage de l'altitude, de la vitesse et de l'attitude de l'aéronef, **caractérisé en ce qu'**il comporte en outre des moyens pour calculer et afficher un vecteur vitesse de l'aéronef, en se qui concerne ses composantes verticale et latérale dans un repère lié à l'aéronef, à partir de données issues des moyens de mesure de la pression statique, de la pression totale et de mesures inertielles. Le calcul du vecteur vitesse se fait sans utiliser de mesure du dérapage et de l'incidence aérodynamiques de l'aéronef. Des sondes de mesure d'incidence et de dérapage existent sur la peau de l'aéronef et sont utilisées par le système primaire de l'aéronef. L'invention permet de calculer et afficher le vecteur vitesse de l'aéronef même si les sondes d'incidence et/ou de dérapage sont en panne ou indisponibles.

Autrement dit, l'instrument de secours comporte des moyens pour déterminer et afficher un vecteur vitesse de l'aéronef uniquement à l'aide des moyens généralement présents dans un instrument de secours, à savoir des moyens de mesure des pressions statique et totale du flux d'air entourant l'aéronef ainsi que de moyens de mesure inertielle.

L'invention sera mieux comprise et d'autres avantages apparaîtront à la lecture de la description détaillée d'un mode de réalisation donné à titre d'exemple, description illustrée par le dessin joint dans lequel :

> la figure 1 représente un exemple d'affichage sur un écran d'un instrument de secours conforme à l'invention ;
> la figure 2 représente sous forme de synoptique les moyens pour déterminer différents symboles affichés sur l'écran représenté sur la figure 1.

Par souci de clarté, les mêmes éléments porteront les mêmes repères dans les différentes figures.

Un instrument de secours équipant le tableau de bord d'un aéronef comporte des moyens pour calculer et afficher des informations de vol à partir de données fournies par des capteurs appartenant principalement à l'instrument de secours.

L'instrument de secours comporte des moyens de mesure de la pression statique et de la pression totale d'un flux d'air entourant l'aéronef. Les moyens de mesure de pression sont reliés à des prises de pression situées sur la peau de l'aéronef. L'instrument de secours ne comporte aucun moyen de mesure de l'incidence et du dérapage aérodynamique. L'instrument de secours comporte également des moyens de mesure inertielle permettant de mesurer l'accélération de l'aéronef suivant trois axes de l'aéronef, longitudinal, latéral et vertical. L'accélération longitudinale est notée $Ax$, l'accélération latérale est notée $Ay$ et l'accélération verticale est notée $Az$.

L'instrument de secours est utilisé notamment en cas de panne des écrans de visualisation primaires équipant le tableau de bord d'un aéronef. L'instrument de secours comporte des moyens de calcul et un écran par exemple à cristaux liquide. De façon connue, l'instrument affiche sur son écran l'altitude de l'aéronef sur une partie droite de l'écran, la vitesse de l'aéronef sur une partie gauche de l'écran et l'attitude de l'aéronef au centre de l'écran. L'attitude de l'aéronef est symbolisée par ses ailes par rapport à une ligne d'horizon mobile.

Dans un système de visualisation tête haute, le pilote de l'aéronef dispose, comme dans un instrument de secours connu, des informations de vitesse, altitude et attitude de l'aéronef. Il dispose de plus d'un affichage du vecteur vitesse de l'aéronef, vecteur qui n'est pas affiché sur l'écran d'un instrument de secours connu. Dans un système de visualisation tête haute, le vecteur vitesse est calculé notamment à partir d'information reçus de sondes d'incidence montées sur la peau de l'aéronef. Ces sondes appartiennent au système primaire de l'aéronef et ne sont généralement pas redondées pour l'instrument de secours. L'invention permet au pilote de retrouver les mêmes informations que celles présentes dans un système tête haute, notamment l'affichage du vecteur vitesse de l'aéronef, malgré l'absence de certain capteurs comme par exemple les sondes d'incidence.

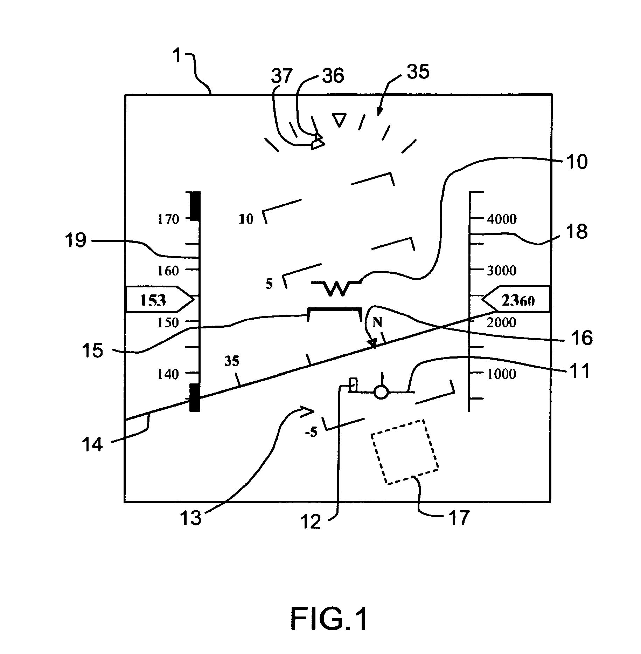

La figure 1 représente un exemple d'affichage sur un écran 1 d'un instrument de secours des informations habituellement présentes dans un système tête haute. Sur cet écran apparaît une maquette 10 représentant l'axe de l'aéronef et située au centre de l'affichage. La maquette 10 est immobile sur l'écran 1.

Un vecteur vitesse 11 de l'aéronef, dit vecteur vitesse sol ou « flight path » dans la littérature anglo-saxonne, est symbolisé sous forme d'une autre maquette pouvant évoluer sur l'écran en fonction de la direction du vecteur vitesse 11 de l'aéronef par rapport au sol. La position de la maquette représentant le vecteur vitesse 11 représente la direction du vecteur vitesse 11 dans un plan perpendiculaire à un axe longitudinal de l'aéronef.

Avantageusement, les moyens pour calculer le vecteur vitesse 11 calculent ce vecteur à partir de données issues des moyens de mesure de la pression statique, de la pression totale et de mesure inertielle sans utiliser de mesure du dérapage et de l'incidence aérodynamiques de l'aéronef. Plus précisément, à partir de la différence de mesure entre la pression totale Pt et la pression statique Ps, on définit le module CAS du vecteur vitesse conventionnelle de l'aéronef, bien connue dans la littérature anglo-saxonne sous le nom de « Conventionnel Air Speed ». La pression totale Pt et la pression statique Ps sont données par des capteurs de pression reliés respectivement à une prise de pression totale et à une prise de pression statique situées toutes deux sur la peau de l'aéronef. Une vitesse sol TAS de l'aéronef, bien connue dans la littérature anglo-saxonne sous le nom de « True Air Speed », est obtenue à partir de la vitesse conventionnelle CAS et de la température statique de l'air entourant l'aéronef. La température statique nécessaire à l'estimation de la vitesse sol par rapport à l'air peut être estimée en faisant l'hypothèse d'un atmosphère dit standard. Autrement dit, on suppose une évolution linéaire de la température statique en fonction de l'altitude.

La mesure de pression statique Ps permettant de déterminer une altitude barométrique, encore appelée altitude pression, on calcule à partir de ces différents éléments une estimation de la vitesse air sur trajectoire. La vitesse sol TAS est alors obtenue par projection sur le plan horizontal de la vitesse air précédemment estimée.

Avantageusement, les moyens pour calculer le vecteur vitesse 11 calculent la direction du vecteur vitesse 11 à partir des moyens de mesure inertielle notamment à partir de la détermination du roulis et du tangage de l'aéronef. Plus précisément, les moyens de mesure inertielle comportent par exemple des accéléromètres mesurant trois accélérations, Ax, Ay et Az dans un repère lié à l'aéronef, et des gyromètres mesurant trois vitesses angulaires Gx Gy Gz de l'aéronef autour des trois axes du repère lié à l'aéronef.

Avantageusement la vitesse verticale Vz est déterminée par une double estimation, d'une part la dérivée de l'altitude pression et d'autre part l'intégration de l'accélération inertielle Az diminuée de l'accélération de la pesanteur. Avantageusement cette double estimation est faite au travers d'une technique de mesure classique appelée boucle baro-inertielle.

Une pente P de l'aéronef peut alors être définie par la relation :

$$P = \text{arc sin}(Vz/TAS) \quad (1)$$

De façon conventionnelle le vecteur vitesse 11 est représenté sur la figure 1 par un symbole ergonomique dont la position sur le plan de la figure 1 est déterminé d'une part par la pente P, pour ce qui concerne sa position dans le plan vertical, et d'autre part par l'accélération latérale Ay en ce qui concerne sa position dans le plan horizontal. Avantageusement, l'instrument de secours comporte des moyens pour calculer et afficher un vecteur vitesse prédictif 12 de l'aéronef. Le vecteur vitesse prédictif ou tendance 12 est calculé à partir de l'évolution (ou dérivée) de la position de la maquette 11. La tendance 12 indique dans quel sens évolue la trajectoire de l'aéronef. La position de la tendance 12 sur l'écran 1 représente, par exemple une position future, au bout d'un certain temps, du vecteur vitesse 11. L'instrument de secours comporte aussi des moyens pour calculer et afficher une énergie potentielle W de l'aéronef à partir de la pente P de l'aéronef et du vecteur vitesse 11. Plus précisément, l'énergie potentielle W est définie par :

$$W = \sin(P) + \frac{1}{g}\frac{d(TAS)}{dt} \quad (2)$$

Dans cette formule, g représente l'accélération de la pesanteur.

Un crochet 13 représente la valeur d'énergie potentielle ou pente totale de l'aéronef. Cette valeur correspond à la pente que peut prendre l'aéronef avec la poussée courante, tout en conservant sa vitesse. Lorsque le crochet 13 est aligné avec la maquette représentant le vecteur vitesse 11, la vitesse de l'aéronef est constante.

Avantageusement, l'instrument comporte des moyens pour calculer et afficher une ligne d'horizon 14 correspondant à celle habituellement affichée sur un instrument de secours et inclinée en fonction de l'assiette de l'aéronef. Pour la détermination de l'assiette de l'aéronef, on pourra par exemple se reporter à la demande de brevet français FR 2 614 694 déposé au nom de SFENA. La ligne d'horizon 14 est affichée sous la forme d'un trait séparant 2 demi-plans de couleurs éventuellement différentes afin de les différentier rapidement. Le ciel est par exemple représenté en bleu ou en gris et le sol en marron ou noir. De plus, on peut afficher un arc de cercle, non représentée sur la figure 1, au centre de la ligne d'horizon 14, situé du coté du ciel, et permettant d'identifier rapidement si l'aéronef est en position ventrale ou dorsale. La ligne d'horizon 14 fournit l'assiette de l'avion, par différence avec la maquette 10. La différence entre La ligne d'horizon 14 et le vecteur vitesse 11 est liée à l'incidence et au dérapage de l'aéronef.

L'instrument de secours comporte avantageusement des moyens pour calculer et afficher une valeur limite d'incidence. Plus précisément, on affiche sur l'écran 1 un crochet d'incidence limite 15 permettant au pilote de connaître l'incidence maximale que l'aéronef ne peut pas dépasser sans risque de décrochage. La valeur de cette incidence maximale peut être une valeur fixe ou fonction de la vitesse conventionnelle de l'aéronef.

La ligne d'horizon 14 est graduée en cap. Sur la figure 1, on a fait apparaître deux valeurs de graduation : 35 pour un cap à 350° et N pour le nord. Un cap suivi par l'aéronef est affiché sous forme d'un onglet 16 susceptible de se déplacer le long de la ligne d'horizon 14.

Avantageusement, l'instrument de secours comporte des moyens pour calculer et afficher une boîte d'approche 17 représentant une trajectoire d'approche souhaitable dans une phase d'atterrissage de l'aéronef. Cette trajectoire est par exemple définie à l'aide d'un système d'aide à l'atterrissage, bien connu dans la littérature anglo-saxonne sous le nom de ILS pour « Instrument Landing System ». La boîte d'approche 17 informe également le pilote sur le tolérances angulaires réglementaires en vertical et en horizontal autour de la trajectoire souhaitable. Dans une phase d'approche, le pilote doit faire entrer la maquette représentant le vecteur vitesse 11 dans la boîte d'approche 17 afin de placer l'aéronef sur la bonne trajectoire d'approche. Tant que la maquette est hors de la boîte d'approche, le contour de la boîte d'approche 17 est dessiné en trait pointillé et une fois la maquette positionnée dans la boîte 17, le pointillé se transforme en un trait plein.

Les informations nécessaires à l'affichage de l'onglet 16 de cap et de la boîte d'approche 17 sont reçues par l'instrument de secours de systèmes primaires de l'aéronef sur des entrées, généralement numériques, de l'instrument de secours.

Une première échelle graduée 18, représentant l'altitude de l'aéronef, est affichée sur la partie droite de l'écran 1 et une seconde échelle graduée 19, représentant la vitesse de l'aéronef, est affichée sur la partie gauche de l'écran 1. La vitesse de l'aéronef, affichée sur l'échelle 19, représente le module du vecteur vitesse par rapport à l'air, tandis que le vecteur vitesse 11 représenté par sa maquette représente la direction ou trajectoire de l'aéronef par rapport au sol.

Avantageusement, l'instrument de secours comporte des moyens pour déterminer un roulis et un dérapage de l'aéronef. Ces deux informations sont affichées en partie supérieure de l'écran 1 dans un repère 35 gradué angulairement par exemple tous les 5°. Un premier onglet, sous forme d'un triangle 36, permet d'afficher le roulis de l'aéronef. Le roulis est déterminé par intégration de la vitesse angulaire Gx de l'aéronef autour de son axe longitudinal. Un second onglet sous forme d'un parallélogramme 37 permet d'afficher le dérapage de l'aéronef déterminé à partir de l'accélération latérale Ay de l'aéronef. Le dérapage est affiché sous forme d'un décalage entre le parallélogramme 37 et le triangle 36.

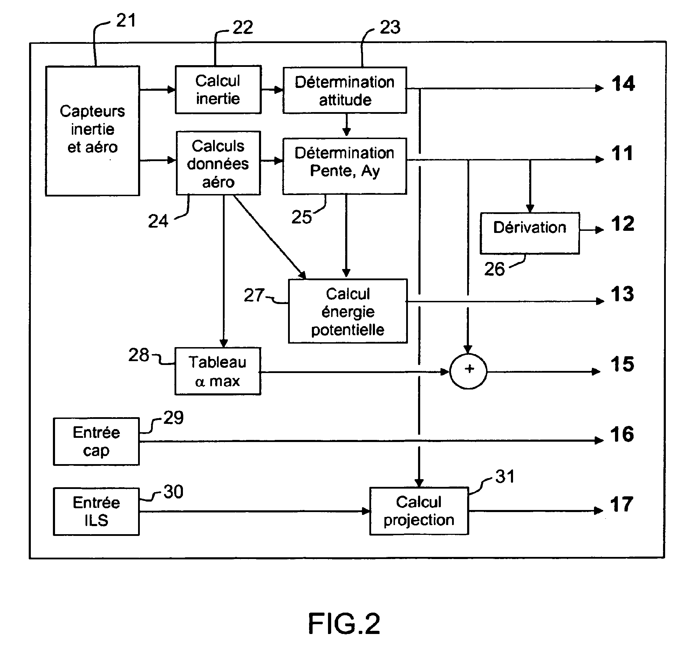

La figure 2 représente sous forme de synoptique les différents moyens pour déterminer les différents symboles affichés sur l'écran 1. Dans un cadre 21 sont placés les moyens de mesure inertielle ainsi que les moyens de mesure de la pression statique Ps et de la pression totale Pt d'un flux d'air entourant l'aéronef. Les moyens de mesure inertielle, par un calcul d'inertie, réalisé au cadre 22, permettent de déterminer au cadre 23 l'attitude de l'aéronef afin d'afficher la ligne d'horizon 14. Par ailleurs, les moyens de mesure de la pression permettent au cadre 24 de définir notamment la vitesse conventionnelle CAS et l'estimation de la vitesse sol TAS de l'aéronef. La détermination du vecteur vitesse 11 se fait au cadre 25 en utilisant les données d'attitude et les données anémo-barométriques calculées au cadre 24. La tendance 12 est définie par dérivation, au cadre 26 de l'évolution du vecteur vitesse 11.

La pente P calculée au cadre 26 ainsi que la valeur TAS estimée au cadre 24 permettent de calculer l'énergie potentielle W au cadre 27. Un tableau 28 d'incidence limite associé au module du vecteur vitesse 11 permet définir le crochet d'incidence limite 15.

Avantageusement, l'instrument de secours comporte des moyens pour calculer et afficher une boîte d'approche 17 définissant un repère guide de la trajectoire de l'aéronef lors d'un atterrissage. Plus précisément, une entrée de l'instrument de secours recevant des informations sur le cap suivi par l'aéronef est représentée au cadre 29, ce qui permet de définir l'affichage de l'onglet 16 de cap. Une autre entrée provenant de l'ILS et représentée au cadre 30 permet de définir la boîte d'approche 17. L'ILS est un système radio donnant des information sur l'axe d'une piste ou l'aéronef peut atterrir. Le centre de cette boîte d'approche 17 est donné directement par les informations provenant de l'ILS Ces informations sont bien connues dans la littérature anglo-saxonne sous le nom de GLIDE pour une position angulaire verticale, et LOC pour une position angulaire horizontale. La taille de la boîte est constante, du fait de la représentation angulaire et est définie par l'ergonomie de l'écran 1.

## Revendications

1. Instrument de secours pour aéronef comportant des moyens de mesure de la pression statique (Ps), de la pression totale (Pt) d'un flux d'air entourant l'aéronef, des moyens de mesure inertielle, des moyens de calcul et d'affichage de l'altitude, (18), de la vitesse (19) et de l'attitude (14) de l'aéronef, **caractérisé en ce qu**'il comporte en outre des moyens pour calculer et afficher un vecteur vitesse (11) de l'aéronef, en ce qui concerne ses composantes verticale et latérale dans un repère lié à l'aéronef, à partir de données issues des moyens de mesure de la pression statique (Ps), de la pression totale (Pt) et de mesure inertielle.

2. Instrument de secours selon la revendication 1, **caractérisé en ce que** les moyens pour calculer le vecteur vitesse (11) calculent ce vecteur sans utiliser de mesure du dérapage et de l'incidence aérodynamique de l'aéronef.

3. Instrument de secours selon rune des revendications précédente, **caractérisé en ce que** les moyens pour calculer le vecteur vitesse (11) calculent un module du vecteur vitesse air de l'aéronef à partir de la différence de mesure entre la pression totale Pt et la pression statique Ps, corrigent le module du vecteur vitesse air en fonction de l'altitude de l'aéronef déterminée au moyen de la mesure de la pression statique (Ps) et d'une mesure de température de l'air entourant l'aéronef pour obtenir le module du vecteur vitesse sol (TAS).

4. Instrument de secours selon l'une des revendications précédentes, **caractérisé en ce que** les moyens pour calculer le vecteur vitesse (11) calculent la direction du vecteur vitesse (11) de l'aéronef à l'aide des moyens de mesure inertielle.

5. instrument de secours selon l'une des revendications précédentes, **caractérisé en ce qu**'il comporte des moyens pour calculer et afficher un vecteur vitesse prédictif (12) de l'aéronef.

6. Instrument de secours selon l'une des revendications précédentes, **caractérisé en ce qu**'il comporte des moyens pour calculer et afficher une énergie potentielle (13) de l'aéronef à partir d'une pente (P) de l'aéronef et du vecteur vitesse (11).

7. Instrument de secours selon l'une des revendications précédentes, **caractérisé en ce qu**'il comporte des moyens pour calculer et afficher une valeur limite d'incidence (15).

8. Instrument de secours selon l'une des revendications précédentes, **caractérisé en ce qu**'il comporte des moyens pour calculer et afficher une ligne d'horizon (14) inclinée en fonction de l'assiette de l'aéronef en en ce qu'un cap (16) suivi par l'aéronef est affiché sur la ligne d'horizon (14).

9. Instrument de secours selon l'une des revendications précédentes, **caractérisé en ce qu**'il comporte des moyens pour calculer et afficher une boite d'approche (17) définissant un repère guide de la trajectoire de l'aéronef lors d'un atterrissage.

## Claims

1. A standby instrument for aircraft, comprising means for measuring the static pressure (Ps) and the total pressure (Pt) of airflow around the aircraft, means for inertial measuring and means for calculating and displaying the altitude (18), the speed (19) and the attitude (14) of the aircraft, **characterised in that** it further comprises means for calculating and displaying a speed vector (11) of the aircraft in terms of its vertical and lateral components according to a marker associated with the aircraft, from data originating from the means for measuring the static pressure (Ps) and the total pressure (Pt) and the means for inertial measuring.

2. The standby instrument according to claim 1, **characterised in that** the means for calculating the speed vector (11) calculate said vector without using a measurement of the side slip and the angle of attack of the aircraft.

3. The standby instrument according to any one of the preceding claims, **characterised in that** the means for calculating the speed vector (11) calculate a modulus of the air speed vector of the aircraft from the measurement difference between the total pressure Pt and the static pressure Ps and correct the air speed vector modulus as a function of the altitude of the aircraft determined from the measurement of the static pressure (Ps) and a measurement of the air temperature around the aircraft in order to obtain the modulus of the ground speed vector (TAS).

4. The standby instrument according to any one of the preceding claims, **characterised in that** the means for calculating the speed vector (11) calculate the direction of the speed vector (11) of the aircraft using means for inertial measuring.

**5.** The standby instrument according to any one of the preceding claims, **characterised in that** it comprises means for calculating and displaying a predictive speed vector (12) of the aircraft.

**6.** The standby instrument according to any one of the preceding claims, **characterised in that** it comprises means for calculating and displaying a potential energy (13) of the aircraft from an incline (P) of the aircraft and the speed vector (11).

**7.** The standby instrument according to any one of the preceding claims, **characterised in that** it comprises means for calculating and displaying a limit angle of incidence value (15).

**8.** The standby instrument according to any one of the preceding claims, **characterised in that** it comprises means for calculating and displaying a line of horizon (14) inclined according to the position of the aircraft and **in that** a heading (16) which the aircraft is following is displayed on the line of horizon (14).

**9.** The standby instrument according to any one of the preceding claims, **characterised in that** it comprises means for calculating and displaying an approach box (17) defining a guide marker of the trajectory of the aircraft during landing.

**Patentansprüche**

**1.** Reserveinstrument für Luftfahrzeuge, umfassend Mittel zum Messen des statischen Drucks (Ps) und des Gesamtdrucks (Pt) eines Luftstroms um das Luftfahrzeug, Mittel zum Trägheitsmessen und Mittel zum Berechnen und Anzeigen der Höhe (18), der Geschwindigkeit (19) und der Lage (14) des Luftfahrzeugs, **dadurch gekennzeichnet, dass** es ferner Mittel zum Berechnen und Anzeigen eines Geschwindigkeitsvektors (11) des Luftfahrzeugs im Hinblick auf seine vertikale und laterale Komponente in einem mit dem Luftfahrzeug assoziierten Marker von Daten umfasst, die von dem Mittel zum Messen des statischen Drucks (Ps) und des Gesamtdrucks (Pt) und dem Mittel zum Trägheitsmessen stammen.

**2.** Reserveinstrument nach Anspruch 1, **dadurch gekennzeichnet, dass** das Mittel zum Berechnen des Geschwindigkeitsvektors (11) diesen Vektor ohne Verwendung einer Messung des Abgleitens und des Anstellwinkels des Luftfahrzeugs berechnet.

**3.** Reserveinstrument nach einem der vorherigen Ansprüche, **dadurch gekennzeichnet, dass** das Mittel zum Berechnen des Geschwindigkeitsvektors (11) ein Modul des Luftgeschwindigkeitsvektors des Luftfahrzeugs von der Messdifferenz zwischen dem Gesamtdruck Pt und dem statischen Druck Ps berechnet und das Luftgeschwindigkeitsvektormodul in Abhängigkeit von der Höhe des Luftfahrzeugs, ermittelt anhand der Messung des statischen Drucks (Ps) und einer Messung der Lufttemperatur um das Luftfahrzeug, korrigiert, um das Modul des Bodengeschwindigkeitsvektors (TAS) zu erhalten.

**4.** Reserveinstrument nach einem der vorherigen Ansprüche, **dadurch gekennzeichnet, dass** das Mittel zum Berechnen des Geschwindigkeitsvektors (11) die Richtung des Geschwindigkeitsvektors (11) des Luftfahrzeugs mit Mitteln zum Trägheitsmessen berechnet.

**5.** Reserveinstrument nach einem der vorherigen Ansprüche, **dadurch gekennzeichnet, dass** es Mittel zum Berechnen und Anzeigen eines prädiktiven Geschwindigkeitsvektors (12) des Luftfahrzeugs umfasst.

**6.** Reserveinstrument nach einem der vorherigen Ansprüche, **dadurch gekennzeichnet, dass** es Mittel zum Berechnen und Anzeigen einer potentiellen Energie (13) des Luftfahrzeugs von einer Neigung (P) des Luftfahrzeugs und vom Geschwindigkeitsvektor (11) umfasst.

**7.** Reserveinstrument nach einem der vorherigen Ansprüche, **dadurch gekennzeichnet, dass** es Mittel zum Berechnen und Anzeigen eines Grenzanstellwinkelwertes (15) umfasst.

**8.** Reserveinstrument nach einem der vorherigen Ansprüche, **dadurch gekennzeichnet, dass** es Mittel zum Berechnen und Anzeigen eines künstlichen Horizonts (14) umfasst, der in Abhängigkeit von der Position des Luftfahrzeugs geneigt ist, und dadurch, dass ein Steuerkurs (16), dem das Luftfahrzeug folgt, auf dem künstlichen Horizont (14) angezeigt wird.

**9.** Reserveinstrument nach einem der vorherigen Ansprüche, **dadurch gekennzeichnet, dass** es Mittel zum Berechnen und Anzeigen einer Anflugbox (17) umfasst, die eine Leitmarkierung der Flugbahn des Luftfahrzeugs beim Landen definiert.

FIG.1

FIG.2

**EP 2 176 623 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2614694